# EUROPEAN PATENT SPECIFICATION

(11) **EP 4 475 230 B1**
(45) Date of publication and mention of the grant of the patent: **21.10.2026**
(21) Application number: 23912751.7
(22) Date of filing: 20.12.2023
(51) Int. Cl.: H01M 4/62, C08C 19/20, C08L 9/00, C08C 19/22, C08F 279/02, H01M 4/587, H01M 10/052, H01M 4/13, H01M 10/0562, C08L 15/00, H01M 10/0525, H01M 4/525, H01M 4/131

(54) **BINDER FOR ALL-SOLID-STATE BATTERY, CATHODE FOR ALL-SOLID-STATE BATTERY, AND ALL-SOLID-STATE BATTERY COMPRISING SAME**
BINDEMITTEL FÜR FESTKÖRPERBATTERIE, KATHODE FÜR FESTKÖRPERBATTERIE UND FESTKÖRPERBATTERIE DAMIT
LIANT POUR UNE BATTERIE ENTIÈREMENT SOLIDE, CATHODE POUR UNE BATTERIE ENTIÈREMENT SOLIDE, ET BATTERIE ENTIÈREMENT SOLIDE LES COMPRENANT

(30) Priority: 27.12.2022 KR 20220185997
(43) Date of publication of application: 11.12.2024
(73) Proprietor: LG Energy Solution, Ltd., Seoul 07335 (KR); Yonsei University, University-Industry Foundation(UIF)., Seoul 03722 (KR)
(72) Inventor: KIM, Donghyeon, Daejeon 34122 (KR); JUNG, Yoon Seok, Seoul 06288 (KR); KIM, Youngbok, Daejeon 34122 (KR); SONG, Min Sang, Daejeon 34122 (KR); KIM, Kyu Tae, Seoul 02603 (KR); KWON, Tae Young, Seoul 06373 (KR); PARK, Young Joon, Seoul 02831 (KR)
(74) Representative: Goddar, Heinz J.
(86) International application number: PCT/KR2023/021086
(87) International publication number: WO 2024/144076

(56) References cited:
- WO-A1-2022/215967
- KR-A- 20080 018 732
- KR-A- 20200 063 467
- KR-A- 20220 140 420
- KR-B1- 102 184 881
- TW-A- 202 234 735
- US-A1- 2014 239 239
- US-A1- 20240 194 880
- JIACHEN SUN, XIN REN, ZHENFEI LI, WEICHAO TIAN, YI ZHENG, LI WANG, GUANGCHUAN LIANG: "Effect of poly (acrylic acid)/Poly (vinyl alcohol) blending binder on electrochemical performance for lithium iron phosphate cathodes", JOURNAL OF ALLOYS AND COMPOUNDS, ELSEVIER SEQUOIA, LAUSANNE., CH, vol. 783, 1 April 2019 (2019-04-01), CH , pages 379 - 386, XP055740965, ISSN: 0925-8388, DOI: 10.1016/j.jallcom.2018.12.197

## Description

### [Technical Field]

The present invention relates to a binder for an all-solid-state battery, a positive electrode for an all-solid-state battery, and an all-solid-state battery comprising the same.

### [Related Art]

While lithium secondary batteries have primarily been applied to small-scale applications such as mobile devices and laptop computers, research has recently expanded to medium and large-scale applications such as energy storage systems (ESS) and electric vehicles (EV).

For these medium and large-scale lithium secondary batteries, unlike smaller ones, the operating environment is harsher (e.g., temperature and shock) and more batteries need to be used, so safety needs to be ensured along with good performance and affordable price.

Currently, most commercially available lithium secondary batteries utilize an organic liquid electrolyte containing lithium salts dissolved in a flammable organic solvent, which has a potential risk of leakage, ignition, and explosion. Therefore, the use of a solid electrolyte instead of the organic liquid electrolyte has been attracting attention as an alternative to overcome the safety issues.

An all-solid-state battery consists of a positive electrode, a solid electrolyte, and a negative electrode, and although sulfides and oxides can be used as solid electrolytes for all-solid-state batteries, a sulfide-based solid electrolyte is the most promising material in terms of lithium ion conductivity.

All-solid-state batteries have a drive mechanism in which lithium ions are transferred through the interface between the active material and the solid electrolyte.

However, due to the volume change of the active material due to the continuous charging and discharging of the all-solid-state battery, the loss of the interfacial contact with the solid electrolyte occurs, which is known to be intensified the smaller the driving pressure of the all-solid-state battery, and it is necessary to improve it.

### [Prior Art References]

### [Patent Literature]

(Patent reference 1) Korean Patent No. 10-1970648 (2019.04.15)

WO2022/215967 A1 discloses a binder for an all-solid-state battery comprising: a first polymer in which a chain comprising a first hydrogen-bonding functional group is grafted with a side chain on the main chain of a conjugated diene-based polymer; and a second polymer in which a chain comprising a second hydrogen-bonding functional group is grafted with a side chain on the main chain of a conjugated diene-based polymer, wherein the first hydrogen-bonding functional group of the first polymer and the second hydrogen-bonding functional group of the second polymer form hydrogen bonds with each other.

TW 202234735 A discloses all-solid battery adhesive using conjugated diene polymer having a modification group allowing bond formation by hydrogen bonding as a donor and/or as an acceptor.

KR 102184881 B1 discloses conjugated diene-based polymers comprising a hydrogen-bonding functional group grafted with a side chain on the main chain of the conjugated diene-based polymers.

### [Detailed Description of the Invention]

### [Technical Problem]

It is an object of the present invention to provide a binder for an all-solid-state battery, comprising a first polymer in which a chain comprising a first hydrogen-bonding functional group is grafted with a side chain on the main chain of a conjugated diene-based polymer and a second polymer in which a chain comprising a second hydrogen-bonding functional group is grafted with a side chain on the main chain of a conjugated diene-based polymer, wherein the first hydrogen-bonding functional group of the first polymer and the second hydrogen-bonding functional group of the second polymer form hydrogen bonds with each other, thereby preventing the loss of interfacial contact with the solid electrolyte as the volume of the active material changes with repeated charging and discharging of the all-solid-state battery, thereby exhibiting so-called "self-healing" properties, so that the initial discharge capacity and coulombic efficiency of the all-solid-state battery can be improved in a low voltage driving environment.

Another object of the present invention is to provide a positive electrode for an all-solid-state battery comprising the binder for an all-solid-state battery, a conductive material, a positive electrode active material, and a solid electrolyte.

It is another object of the present invention to provide an all-solid-state battery having improved electrochemical properties and life characteristics by applying the positive electrode active material for an all-solid-state battery to a positive electrode.

### [Technical Solution]

One Example of the present invention provides a binder for an all-solid-state battery, comprising a first polymer in which a chain comprising a first hydrogen-bonding functional group is grafted with a side chain on the main chain of a conjugated diene-based polymer and a second polymer in which a chain comprising a second hydrogen-bonding functional group is grafted with a side chain on the main chain of a conjugated diene-based polymer, wherein the first hydrogen-bonding functional group of the first polymer and the second hydrogen-bonding functional group of the second polymer form hydrogen bonds with each other, wherein the first polymer and the second polymer are different from each other, the first hydrogen-bonding functional group is a carboxylic group, the second hydrogen-bonding functional group is an amine group, and the molar ratio of the first hydrogen-bonding functional group or the second hydrogen-bonding functional group to the conjugated diene-based polymer is 100:1 to 100:30, respectively.

The conjugated diene-based polymer may comprise repeating units derived from one or more monomers selected from the group consisting of 1,3-butadiene, 2,3-dimethyl-1,3-butadiene, 2-ethyl-1,3-butadiene, 1,3-pentadiene, 2-halo-1,3-butadiene (wherein "halo" means a halogen atom), and isoprene.

The first polymer and second polymer may be a compound comprising a mercapto group (-SH) grafted onto the main chain of the conjugated diene-based polymer.

Another Example of the present invention provides a positive electrode for an all-solid-state battery, comprising a binder for an all-solid-state battery of the invention, a conductive material, a positive electrode active material, and a solid electrolyte.

The solid electrolyte may be at least one selected from the group consisting of Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is any one of Ge, Zn and Ga), Li₂S-GeS₂, Li₂S-SiS₂-Li₃PO₄, Li₂S-SiS₂-LiₚMO_{q} (wherein p and q are positive numbers, and M is any one of P, Si, Ge, B, Al, Ga and In), Li₇₋ₓPS₆₋ₓClₓ (wherein 0≤x≤2), Li₇₋ₓPS₆₋ₓBrₓ (wherein 0≤x≤2) and Li₇₋ₓPS₆₋ₓOₓ (wherein 0≤x≤2).

The solid electrolyte may be an argyrodite-type solid electrolyte comprising one or more selected from the group consisting of Li₆PS₅Cl, Li₆PS₅Br and Li₆PS₅I.

Another Example of the present invention provides an all-solid-state battery comprising a positive electrode, a negative electrode, and a solid electrolyte layer disposed between the positive electrode and negative electrode, wherein the positive electrode comprises the positive electrode for the all-solid-state battery according to the invention.

### [Advantageous Effects]

According to the present invention, a binder for an all-solid-state battery comprises a first polymer in which a chain comprising a first hydrogen-bonding functional group is grafted with a side chain on the main chain of a conjugated diene-based polymer and a second polymer in which a chain comprising a second hydrogen-bonding functional group is grafted with a side chain on the main chain of a conjugated diene-based polymer, wherein the first hydrogen-bonding functional group of the first polymer and the second hydrogen-bonding functional group of the second polymer form hydrogen bonds with each other, thereby preventing the loss of interfacial contact with the solid electrolyte as the volume of the active material changes with repeated charging and discharging of the all-solid-state battery, thereby exhibiting so-called "self-healing" properties, so that the initial discharge capacity and coulombic efficiency of the all-solid-state battery can be improved in a low voltage driving environment.

### [Brief Description of Drawing]

FIG. 1 is a graph depicting the initial discharge capacity of an all-solid-state battery according to Examples and comparative examples of the present invention.
FIG. 2 is a graph depicting the initial Coulombic efficiency of an all-solid-state battery according to Examples and comparative examples of the present invention.
FIG. 3 is a graph depicting the results of -NMR spectral measurements that can confirm the presence of hydrogen-bonding functional groups in binders for all-solid-state batteries according to Examples and comparative examples of the present invention.

### [Best Mode for Practicing the Invention]

Examples of the present invention are described in detail. It should be noted that the terms and words used in this specification and claims are not to be construed in their ordinary or dictionary sense, but are to be interpreted in a sense and concept consistent with the technical idea of the present invention, based on the principle that the inventor(s) may properly define the concept of a term to best describe his/her invention.

Throughout the specification, when a part "includes" a component, it may indicate further including other components, not excluding other components, unless stated to the contrary.

Also, throughout the description and claims of the present invention, the singular expressions include the plural expressions, unless otherwise noted.

Furthermore, throughout the description and claims of the present invention, "or" includes "and," unless otherwise noted. Thus, "comprising A or B" indicates all these three cases: comprising A, comprising B, and comprising A and B.

Moreover, all numerical ranges include the values at both ends and all intermediate values therebetween, unless explicitly stated to exclude them.

### <Binder for an all-solid-state battery>

The binder for an all-solid-state battery according to one Example of the present invention is described as follows.

The present invention relates to a binder for an all-solid-state battery that can prevent active material, particularly positive electrode active material, and solid electrolyte interface detachment due to repeated charge and discharge operation of the all-solid-state battery, and improve initial discharge capacity and Coulombic efficiency under low voltage operation.

Coating technology, single crystal active material technology, and functional polymer technology for electrochemical and mechanical stress suppression have been studied to form a stable interface between the positive electrode active material and the solid electrolyte in an all-solid-state battery electrode, and in particular, the development of functional polymer technology is drawing attention as an effective technology because it enables electrochemical and mechanical stress suppression at the battery level.

Conventionally, polar functional groups have been introduced or three-dimensional structures have been formed to improve the electrochemical and mechanical stress suppression capabilities of non-polar rubber-like polymers.

However, there are limitations in suppressing the irreversible interfacial detachment that occurs when a certain level of stress is applied to an all-solid-state battery.

Accordingly, in order to solve the above problem, the present invention was completed by confirming that a binder for an all-solid-state battery, comprising different polymers in which a chain comprising a hydrogen-bonding functional group is grafted with a side chain on the main chain of a conjugated diene-based polymer, wherein the hydrogen-bonding functional groups of each polymer form hydrogen bonds with each other, thereby preventing the loss of interfacial contact with the solid electrolyte as the volume of the active material changes with repeated charging and discharging of the all-solid-state battery, thereby exhibiting so-called "self-healing" properties, so that the initial discharge capacity and coulombic efficiency of the all-solid-state battery can be improved in a low voltage driving environment.

A binder for an all-solid-state battery according to one Example of the present invention comprises a first polymer in which a chain comprising a first hydrogen-bonding functional group is grafted with a side chain on the main chain of a conjugated diene-based polymer and a second polymer in which a chain comprising a second hydrogen-bonding functional group is grafted with a side chain on the main chain of a conjugated diene-based polymer, wherein the first hydrogen-bonding functional group of the first polymer and the second hydrogen-bonding functional group of the second polymer form hydrogen bonds with each other, wherein the first polymer and the second polymer are different from each other, the first hydrogen-bonding functional group is a carboxylic group, the second hydrogen-bonding functional group is an amine group, and the molar ratio of the first hydrogen-bonding functional group or the second hydrogen-bonding functional group to the conjugated diene-based polymer is 100:1 to 100:30, respectively.

The binder for an all-solid-state battery comprises polymers different from each other, in which each comprises a non-polar conjugated diene-based polymer as a main chain and a polar functional group capable of internal hydrogen bonding is grafted with a side chain, thereby improving the suppression ability of the electrochemical-mechanical stress generated inside the all-solid-state battery upon charging and discharging of the all-solid-state battery.

Specifically, the binder according to the present invention can impart so-called "self-healing" properties through hydrogen bonding between different polymers, thus preventing the loss of interfacial contact between solid electrolytes due to changes in the volume of the positive electrode active material during the continuous charging and discharging of an all-solid-state battery.

The conjugated diene-based polymer may be a copolymer comprising conjugated diene-based monomer-derived repeating units, and further comprising diene-based monomer-derived repeating units having, for example, 1 to 10 carbon atoms. The diene-based monomer-derived repeating units having 1 to 10 carbon atoms may be repeating units derived from a diene-based monomer different from the conjugated diene-based monomer.

In one Example of the present invention, the conjugated diene-based polymer may comprise repeating units derived from one or more monomers selected from the group consisting of 1,3-butadiene, 2,3-dimethyl-1,3-butadiene, 2-ethyl-1,3-butadiene, 1,3-pentadiene, 2-halo-1,3-butadiene (wherein "halo" means a halogen atom), and isoprene.

Specifically, the non-polar conjugated diene-based polymer that is the main chain of the first polymer or second polymer may be a homopolymer or copolymer of the conjugated diene-based monomer. For example, if the conjugated diene-based polymer comprises repeating units derived from 1,3-butadiene, the polymer may be a polymer comprising 1,2-polybutadiene, cis-1,4-polybutadiene, and trans-1,4-polybutadiene, or repeating units of 1,2-polybutadiene and 1,4-polybutadiene, and may be a polymer comprising cyclic hydrocarbon repeating units wherein the double bonds residing in the repeating units of the conjugated diene-based polymer and the conjugated diene-based monomer are linked together.

Preferably, when the conjugated diene-based polymer comprises repeating units derived from 1,3-butadiene, it may be a polymer comprising repeating units of 1,2-polybutadiene and 1,4-polybutadiene, as represented by Formula 1 below, wherein the vinyl groups contained in the repeating units of 1,2-polybutadiene may form grafting copolymers with compounds containing hydrogen-bonding functional groups.

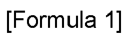

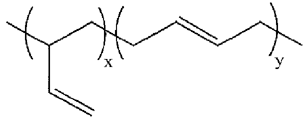

In one Example of the present invention, the first hydrogen-bonding functional group grafted with the side chain of the first polymer included in the binder for an all-solid-state battery may be a "hydrogen bonding donor" such that it is capable of hydrogen bonding with a second hydrogen-bonding functional group of the second polymer, and may be of any kind capable of forming a hydrogen bond with the hydrogen bonding acceptor.

The first hydrogen-bonding functional group is a carboxylic group.

In one Example of the present invention, the second hydrogen-bonding functional group grafted with the side chain of the second polymer included in the binder for an all-solid-state battery may be a "hydrogen bonding acceptor" such that it is capable of forming a hydrogen bond with the first hydrogen-bonding functional group of the first polymer, and may be of any kind capable of forming a hydrogen bond with the hydrogen bonding donor.

The second hydrogen-bonding functional group is an amine group.

When a carboxylic group acts as a hydrogen bonding donor in the first hydrogen-bonding functional group, it can be understood that the hydrogen atom of the hydroxyl portion of the carboxylic group, other than the carbonyl group, acts as the hydrogen bonding donor.

When an amine group in a secondary hydrogen-bonding functional group acts as a "hydrogen bonding acceptor," it can be understood that the unshared electron pair of the nitrogen atom of the amine group acts as the hydrogen bonding acceptor.

The molar ratio of the first hydrogen-bonding functional group to the conjugated diene-based polymer can be 100:1 to 100:30.

Further, in one Example of the present invention, the molar ratio of the second hydrogen-bonding functional group to the conjugated diene-based polymer can be 100:1 to 100:30.

For example, the molar ratio of each hydrogen-bonding functional group to the conjugated diene-based polymer may be 100:1 or greater, 100:2 or greater, 100:3 or greater, 100:4 or greater, 100:5 or greater, 100:6 or greater, 100:7 or greater, 100:8 or greater, or 100:9 or greater, 100:30 or less, 100:29 or less, 100:28 or less, 100:27 or less, 100:26 or less, 100:25 or less, 100:24 or less, 100:23 or less, 100:22 or less, 100:21 or less, 100:20 or less, 100:19 or less, 100:18 or less, 100:17 or less, 100:16 or less, 100:15 or less, 100:14 or less, 100:13 or less, 100:12 or less, or 100:11 or less.

If the molar ratio of each hydrogen-bonding functional group is less than the above ratio, there is a problem that the first polymer and the second polymer in the binder cannot form internal hydrogen bonds with each other to sufficiently impart the "self-healing property" to the binder, and if the ratio exceeds the above ratio, the material comprising each hydrogen-bonding functional group may remain in the electrode and cause side reactions with, for example, a sulfide-based solid electrolyte in the positive electrode, so it is appropriately adjusted within the above range.

In one Example of the present invention, the first and second polymers may be compounds comprising a mercapto group (-SH) grafted onto the main chain of the conjugated diene-based polymer.

In other words, the first polymer and the second polymer included in the binder according to the present invention may be formed by grafting polymerization of a thiyl radical formed from a compound comprising a mercapto group and a double bond of a conjugated diene-based polymer as a main chain of each polymer through a thiol-ene reaction.

The thiol-ene reaction is a reaction in which an alkyl sulfide is formed from a mercapto group of a compound containing the mercapto group and the double bond of a conjugated diene-based polymer by radicals generated by UV irradiation or heating, and has the advantage of being able to form a polymer very quickly and with high yield under mild conditions.

For example, in the first polymer, a double bond of a conjugated diene-based polymer, and a compound comprising both of a mercapto group and a first hydrogen-bonding functional group are mixed, and the mixture is irradiated with UV light, such that the double bond of the conjugated diene-based polymer and the mercapto group are grafted via the thiol-ene reaction to form an alkyl sulfide, wherein the portion of the first hydrogen-bonding functional group in the compound comprising both the mercapto group and the first hydrogen-bonding functional group that is not linked to the conjugated diene-based polymer may be left in a state that can form a hydrogen bond with the second hydrogen-bonding functional group of the second polymer.

Compounds containing both a mercapto group and a first hydrogen-bonding functional group may include 3-mercaptopropionic acid, 3-mercaptopropionate, ethylene glycol di-(3-mercaptopropionate), trimethylolpropane tri(3-mercaptopropionate), pentaerythritol tetra(3-mercaptopropionate), dipentaerythritol hexa(3-mercaptopropionate), ethoxylated trimethylolpropane tri(3-mercaptopropionate), tris[2-(3-mercaptopropionyloxy)ethyl]isocyanurate, polycaprolactone tetra(3-mercaptopropionate), pentaerythritol tetra(3-mercaptobutylate), 1,4-bis(3-mercaptobutyryloxy)butane, 1,3,5-tris(3-mercaptobutyloxyethyl)-1,3,5-triazine-2,4,6(1H,3H,5H)-trione, and trimethylolpropane tris(3-mercaptobutylate), but are not limited thereto as long as it comprises both a mercapto group and a hydrogen-bonding functional group in one molecule, preferably 3-mercaptopropionic acid.

In the second polymer, a double bond of a conjugated diene-based polymer, and a compound comprising both of a mercapto group and a second hydrogen-bonding functional group are mixed, and the mixture is irradiated with UV light, such that the double bond of the conjugated diene-based polymer and the mercapto group are grafted via the thiol-ene reaction to form an alkyl sulfide, wherein the portion of the second hydrogen-bonding functional group in the compound comprising both the mercapto group and the second hydrogen-bonding functional group that is not linked to the conjugated diene-based polymer may be left in a state that can form a hydrogen bond with the first hydrogen-bonding functional group of the first polymer.

Compounds containing both a mercapto group and a second hydrogen-bonding functional group may include cysteamine, 4-aminobutane-1-thiol, 5-aminobutane-1-thiol, 1-aminopropan-2-thiol, 2-amino-1-butanethiol, 3-amino-1-butanethiol, 4-amino-2-butanethiol, 6-amino-1-hexenethiol, and 7-amino-1-heptenethiol, but are not limited thereto as long as it comprises both a mercapto group and a hydrogen-bonding functional group in one molecule, preferably cysteamine.

Next, a method for manufacturing a binder for an all-solid-state battery is described as follows.

The binder for an all-solid-state battery may be prepared by preparing a first polymer and a second polymer, and mixing them.

First, the first polymer may be obtained by adding a conjugated diene-based polymer as the main chain and a compound comprising a first hydrogen-bonding functional group together with a photoinitiator to a solvent to prepare a first polymer solution, and then irradiating it with a UV light through a thiol-ene reaction via radical formation.

The conjugated diene-based polymer that is the main chain of the first polymer and the compound comprising the first hydrogen-bonding functional group are described above, and a detailed description thereof is omitted hereinafter.

The solvent is not limited as long as it does not react with sulfide-based solid electrolytes and are capable of dispersing a conjugated diene-based polymer and a compound comprising a first hydrogen-bonding functional group without affecting its properties, such as, a mixed solvent of one or two or more selected from the group consisting of 1,1-dichloro-1-fluorethane, propylene dichloride, cyclohexane, methylcyclohexane, ethylcyclohexane, trichloroethylene, 1,2-dichloroethylene, dichloromethane, trichloroethane, dibromomethane, pentane, 1,2-dichloroethane, heptane, hexane, xylene, toluene, butyl butyrate, and n-propyl bromide.

The photoinitiator is not limited as long as it allows the radical reaction of the double bond of a conjugated diene-based polymer and a mercapto group of a compound comprising a first hydrogen-bonding functional group to proceed, for example, 2,2-dimethoxy-2-phenylacetophenone (DMPA), benzoyl peroxide, 2,2-diethoxyacetophenone, 3-hydroxyacetophenone, 1-hydroxycyclohexyl phenyl ketone, benzophenone, 2-hydroxy-2-methylpropiophenone, 2,2-diethoxyacetophenone, 2,2-dimethoxy-2-phenyl-acetophenone, or combinations thereof.

The second polymer can also be prepared by the same method as for the first polymer, except that a compound comprising a second hydrogen-bonding functional group is used.

Next, the first polymer solution and the second polymer solution are mixed to prepare a polymer mixture solution, and the solution is dried to prepare a binder for an all-solid-state battery comprising the first polymer and the second polymer.

If desired, the binder for anall-solid-state battery prepared above can be further added with a photoinitiator to a solvent of the same type as that used to prepare the respective polymer solution above, to prepare a binder solution, and the solution can be dried, and then irradiated with a UV light source.

### <Positive electrode for an all-solid-state battery>

According to another aspect, there is provided a positive electrode for an all-solid-state battery comprising a binder for an all-solid-state battery according to one Example of the present invention.

In one Example, the positive electrode for an all-solid-state battery may include a binder as described above for an all-solid-state battery, a conductive material, a positive electrode active material, and a solid electrolyte.

Since the detail of the binder for an all-solid-state battery is the same as those described above, a detailed description of the binder included in the positive electrode for an all-solid-state battery according to the present invention is omitted hereinafter.

The binder for anall-solid-state battery may be comprised in an amount of about 0.01 to 10 parts by weight, or 0.01 to 5 parts by weight, or 0.01 to 3 parts by weight, based on a total of 100 parts by weight of the positive electrode for anall-solid-state battery.

In addition to the binder for an all-solid-state battery according to the present invention, it is possible to further include an acrylic-based binder, a polyvinylidene fluoride (PVDF)-based binder, a polytetrapluoroethylene (PTFE)-based binder, or a butadiene rubber-based binder such as nitrile butadiene rubber (NBR), and various other polymeric binders having the content within the above range.

The positive electrode active material included in the positive electrode for an all-solid-state battery is not particularly limited, as long as the material is capable of reversible adsorption and release of lithium ions. For example, it may comprise one or more of complex compounds of a metal of cobalt, manganese, nickel, iron, or a combination thereof; and lithium.

As a more specific example, as the core of thepositive electrode active material, a compound represented by any of the following formulae can be used:LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃(wherein 0 ≤ f ≤ 2); Li_{(3-f)}Fe₂(PO₄)₃(wherein 0 ≤ f ≤ 2); and LiFePO₄.

In the above formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P or a combination thereof; G is Al, Cr, Mn, Fe, Mg, La, Ce, Sr, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

In one Example, the positive electrode active material may have a particle size of about 0.01 µm to 50 µm, and may have the form of secondary particles assembled by agglomeration of a plurality of particles.

The conductive material included in the positive electrode for an all-solid-state battery is not particularly limited as long as it has conductivity without causing any chemical changes in the battery, for example, one or a mixture of two or more selected from graphite, such as natural graphite or artificial graphite; carbon black, such as carbon black, acetylene black, ketjen black, channel black, furnace black, lamp black, or summer black; conductive fibers, such as carbon fibers like vapor grown carbon fiber (VGCF) or metal fibers; carbon fluoride powders; metal powders, such as aluminum, or nickel powder; conductive whiskers, such as zinc oxide, or potassium titanate; conductive metal oxides, such as titanium oxide; and conductive materials, such as polyphenylene derivatives.

According to one Example of the present invention, the positive electrode for an all-solid-state battery may comprise a conductive material in an amount of 0 to 30% by weight, based on 100% by weight of the positive electrode for an all-solid-state battery. According to a specific Example of the present invention, the conductive material may be included in a range of 0.5% by weight or more, 1% by weight or more, 3% by weight or more, or 5% by weight or more within the above ranges, and may also be included in a range of 15% by weight or less, 10% by weight or less, 7% by weight or less, or 5% by weight or less. For example, the conductive material may be included in an amount of 0.5 to 5% by weight based on 100% by weight of the positive electrode for an all-solid-state battery. When a conductive material is contained in an amount more than the above upper limit, the energy density is reduced due to a lower percentage of active material, and when a conductive material is contained in an amount less than the above lower limit, the capacity utilization is reduced due to a lower than desired level of electronic conductivity.

The solid electrolyte included in the positive electrode for an all-solid-state battery may be, for example, a sulfide-based solid electrolyte, wherein the sulfide-based solid electrolyte may be represented by Formula 2 below.

[Formula 2] LiₖM²ₗSₘX²ₙ,

wherein M² is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W, or La, X² is F, Cl, Br, I, Se, Te, or O, and 0<k≤6, 0<l≤6, 0<m≤6, and 0≤n≤6.

For example, in Formula 2, M² may be B, Si, Ge, P, or N.

For example, in Formula 2, X² may be F, Cl, Br, I, or O.

For example, the sulfide-based solid electrolyte represented by Formula 2 may be one or more selected from the group consisting of Li₂S-P₂S₅, Li₂S-P₂S₅-LiX, wherein X is a halogen atom, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers, and Z is any one of Ge, Zn or Ga, Li₂S-GeS₂, Li_{2S}-SiS₂-Li₃PO₄, Li₂S-SiS₂-LiₚMO_{q}, wherein p and q are positive numbers, and M is any one of P, Si, Ge, B, Al, Ga or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2.

Further, the sulfide-based solid electrolyte may preferably be an argyrodite-type solid electrolyte comprising one or more selected from the group consisting of Li₆PS₅Cl, Li₆PS₅Br and Li₆PS₅I.

The positive electrode for an all-solid-state battery according to one Example of the present invention may comprise a current collector and a positive electrode active material layer formed on at least one side of the current collector, wherein the positive electrode active material layer may comprise a binder, a solid electrolyte, a conductive material, and a positive electrode active material as described above.

The positive electrode can be manufactured according to methods well known in the art, and while not limited to a particular manufacturing method, for example, can be manufactured by mixing the positive electrode active material, the solid electrolyte, the conductive material, and the binder in a solvent to produce a slurry-based positive electrode compound, and applying the positive electrode compound to the positive electrode current collector.

The positive electrode current collector is typically made with a thickness of 3 to 500 µm. Such positive electrode current collector is not particularly limited as long as it has a high conductivity without causing any chemical changes in the battery, for example, stainless steel, aluminum, nickel, titanium, calcined carbon, or aluminum or stainless steel whose surface is treated with carbon, nickel, titanium or silver. The current collector may also have microscopic irregularities formed on its surface to increase the adhesion of the positive electrode active material, and may be in the form of a film, sheet, foil, net, porous material, foam, nonwoven material, or the like.

In addition to the positive electrode active material, solid electrolyte, conductive material, and binder described above, the positive electrode may further comprise additives such as fillers, coatings, dispersants, or ionic conductivity aids. As the fillers, coatings, dispersants, or ionic conductivity aids, materials known as generally used for electrodes of all-solid-state secondary batteries can be used.

The thickness of the positive electrode may be, for example, 70 to 150 µm.

### <All-Solid-State battery>

Another Example of the present invention provides an all-solid-state battery comprising a positive electrode, a negative electrode, and a solid electrolyte layer disposed between the positive electrode and the negative electrode, wherein the positive electrode is a positive electrode for an all-solid-state battery as described above.

Since the positive electrode included in an all-solid-state battery has been described in detail above, the negative electrode and solid electrolyte included in an all-solid-state battery are described in detail below.

The solid electrolyte layer disposed between the positive electrode and negative electrode may comprise, for example, a sulfide-based solid electrolyte. The sulfide-based solid electrolyte may be the same as or different from the sulfide-based solid electrolyte included in the positive electrode.

For specific information on sulfide-based solid electrolyte, see the positive electrode section above.

The elastic modulus, or Young's modulus, of the solid electrolyte is, for example, 35 GPa or less, 30 GPa or less, 27 GPa or less, 25 GPa or less, or 23 GPa or less. The elastic modulus, or Young's modulus, of the solid electrolyte is, for example, 10 to 35 GPa, 15 to 35 GPa, 15 to 30 GPa, or 15 to 25 GPa. By having the solid electrolyte have an elastic modulus in this range, pressing and/or sintering of the solid electrolyte is more easily accomplished.

The solid electrolyte layer further comprises, for example, a binder. The binder included in the solid electrolyte layer can be, for example, styrene butadiene rubber (SBR), polytetrafluoroethylene, polyvinylidene fluoride, or polyethylene, or any other binder used in the art. The binder of the solid electrolyte layer may be the same or different from the binder of the positive electrode active material layer and the negative electrode active material layer.

Next, the negative electrode of an all-solid-state battery may include a negative electrode current collector and a negative electrode active material layer.

The thickness of the negative electrode active material layer is, for example, 50% or less, 40% or less, 30% or less, 20% or less, 10% or less, or 5% or less of the thickness of the positive electrode active material layer. The thickness of the negative electrode active material layer is, for example, 1 µm to 20 µm, 2 µm to 10 µm, or 3 µm to 7 µm. If the thickness of the negative electrode active material layer is too thin, the lithium dendrite formed between the negative electrode active material layer and the negative electrode current collector may collapse the negative electrode active material layer, making it difficult to improve the cycling characteristics of the all-solid-state battery. If the thickness of the negative electrode active material layer is increased excessively, the energy density of the all-solid-state battery decreases and the internal resistance of the all-solid-state battery increases due to the negative electrode active material layer, making it difficult to improve the cycling characteristics of the all-solid-state battery.

The negative electrode active material layer includes, for example, a negative electrode active material that forms an alloy or compound with lithium.

The negative electrode active material comprised in the negative electrode active material layer has, for example, a particle shape. The particulate negative electrode active material has an average particle size of, for example, 4 µm or less, 3 µm or less, 2 µm or less, 1 µm or less, or 900 nm or less. The average particle size of the negative electrode active material is, for example, 10 nm to 4 µm or less, 10 nm to 3 µm or less, 10 nm to 2 µm or less, 10 nm to 1 µm or less, or 10 nm to 900 nm or less. The negative electrode active material may have an average particle size in this range to facilitate reversible absorption and/or desorption of lithium during charge and discharge. The average particle size of the negative electrode active material is, for example, a volume equivalent median diameter (D50) measured using a laser particle size distribution meter.

The negative electrode active material comprised in the negative electrode active material layer includes, for example, one or more selected from a carbon-based negative electrode active material and a metallic or semi-metallic negative electrode active material.

The carbon-based negative electrode active material is in particular amorphous carbon. Amorphous carbon is, for example, carbon black (CB), acetylene black (AB), furnace black (FB), ketjen black (KB), or graphene, but is not necessarily limited thereto, and can be any carbon classified as amorphous in the art. Amorphous carbon is carbon that is not crystalline or has very low crystallinity, as distinguished from crystalline or graphitic carbon.

A metallic or semi-metallic negative electrode active material includes one or more selected from the group consisting of, but is not necessarily limited to, gold (Au), platinum (Pt), palladium (Pd), silicon (Si), silver (Ag), aluminum (Al), bismuth (Bi), tin (Sn), and zinc (Zn), as long as the metal or semi-metal negative electrode active material forms an alloy or compound with lithium in the art. For example, nickel (Ni) is not a metal negative electrode active material because it does not form an alloy with lithium.

The negative electrode active material layer may comprise one of negative electrode active material, or a mixture of a plurality of different negative electrode active materials. For example, the negative electrode active material layer may comprise only amorphous carbon, or may comprise one or more selected from the group consisting of gold (Au), platinum (Pt), palladium (Pd), silicon (Si), silver (Ag), aluminum (Al), bismuth (Bi), tin (Sn), and zinc (Zn). Alternatively, the negative electrode active material layer comprises a mixture of amorphous carbon with one or more selected from the group consisting of gold (Au), platinum (Pt), palladium (Pd), silicon (Si), silver (Ag), aluminum (Al), bismuth (Bi), tin (Sn), and zinc (Zn). The mixture ratio of amorphous carbon to silver (Ag), for example, is 10:1 to 1:2, 5:1 to 1:1, or 4:1 to 2:1 by weight, but is not necessarily limited thereto, and is selected based on the required characteristics of the all-solid-state battery. By having this composition of the negative electrode active material, the cycling characteristics of the all-solid-state battery are further improved.

The negative electrode active material comprised in the negative electrode active material layer includes, for example, a mixture of first particles comprising amorphous carbon and second particles comprising metal or semi-metal. Metal or semi-metal includes, for example, gold (Au), platinum (Pt), palladium (Pd), silicon (Si), silver (Ag), aluminum (Al), bismuth (Bi), tin (Sn), or zinc (Zn). A semi-metal is otherwise a semiconductor. The content of the second particles is 8 to 60% by weight, 10 to 50% by weight, 15 to 40% by weight, or 20 to 30% by weight, based on the total weight of the mixture. By having a content of the second particles in this range, the cycling characteristics of, for example, an all-solid-state battery are further improved.

The negative electrode active material layer comprises, for example, a binder. The binder may be, for example, but is not necessarily limited to, styrene-butadiene rubber (SBR), polytetrafluoroethylene, polyvinylidene fluoride, polyethylene, vinylidene fluoride/hexafluoropropylene copolymer, polyacrylonitrile, polymethylmethacrylate, or any other binder known in the art. The binder may consist of a single binder or a plurality of different binders.

By including a binder in the negative electrode active layer, the negative electrode active material layer is stabilized on the negative electrode current collector. Furthermore, cracking of the negative electrode active material layer is suppressed despite changes in the volume and/or relative position of the negative electrode active layer during charge and discharge. For example, if the negative electrode active material layer does not include a binder, the negative electrode active material layer can be easily separated from the negative electrode current collector. Where the negative electrode active material layer is separated from the negative electrode current collector, the negative electrode current collector is exposed and in contact with the solid electrolyte layer, increasing the likelihood of occurrence of a short circuit. The negative electrode active material layer is produced, for example, by applying a slurry of dispersed materials constituting the negative electrode active material layer to the negative electrode current collector and drying it. By including a binder in the negative electrode active layer, a stable dispersion of the negative electrode active material in the slurry is achieved. For example, when the slurry is applied to the negative electrode current collector by screen printing, it is possible to prevent clogging of the screen (e.g., clogging by agglomerates of the negative electrode active material).

The negative electrode current collector comprises, for example, a material that does not react with lithium, i.e. does not form both alloy and compound. The material constituting the negative electrode current collectormay be, but is not necessarily limited thereto, for example, copper (Cu), stainless steel, titanium (Ti), iron (Fe), cobalt (Co), nickel (Ni), or any material thatis used as an electrode current collector in the art. The negative electrode current collector may consist of one of the metals described above, or an alloy or cladding material of two or more metals. The negative electrode current collector may be, for example, in the form of a plate or foil.

The negative electrode active material layer can further comprise conventional additives used in all-solid-state batteries, such as fillers, dispersants, ionic conductors, and the like.

An all-solid-state battery may be manufactured, for example, by fabricating a positive electrode, a negative electrode, and a solid electrolyte layer, and then stacking these layers.

The present invention provides a battery module including the all-solid-state battery as a unit cell, a battery pack including the battery module, and a device including the battery pack as a power source.

Specific examples of such devices include, but are not limited to, a power tool powered by an electric motor; an electric vehicle, including an electric vehicle (EV), a hybrid electric vehicle (HEV), and a plug-in hybrid electric vehicle (PHEV); an electric two-wheeled vehicle, including an electric bicycle (E-bike) and an electric scooter; an electric golf cart; and a power storage system.

### [Mode for Practicing the Invention]

Specific Examples of the present invention are set forth below. However, the Examples described below are intended only to specifically illustrate or describe the present invention, and are not intended to limit the present invention. In addition, matters not described herein are sufficiently inferred by those skilled in the art and are omitted herein.

### Preparation Example 1: Manufacture of a binder for an all-solid-state battery

(1) To 25 ml of dichloromethane as a solvent, 5.0 g of polybutadiene as a conjugated diene-based polymer and 0.98 g of 3-mercaptopropionic acid as a compound containing a first hydrogen-bonding functional group were added with 0.02 g of 2,2-dimethoxy-2-phenylacetophenone as a photoinitiator to prepare a mixed solution (polybutadiene and 3-mercaptopropionic acid were in a molar ratio of 10:1); and the mixed solution was irradiated with a mercury light source (light source intensity 85 mW/cm²) at a wavelength of 365 nm, and mixed at 300 rpm for 4 hours at room temperature to prepare a solution of the first polymer (PB-COOH) in which a chain comprising a carboxy group was grafted with a side chain onto a polybutadiene side chain.
(2) To a mixed solvent of 25 ml of dichloromethane and 2.5 ml of ethanol, 5.0 g of polybutadiene as a conjugated diene-based polymer, and 0.71 g of cysteamine as a compound containing a second hydrogen-bonding functional group were added with 0.02 g of 2,2-dimethoxy-2-phenylacetophenone as a photoinitiator to prepare a mixed solution (polybutadiene and cysteamine were in a molar ratio of 10:1);and the mixed solution was irradiated with a mercury light source (light source intensity 85 mW/cm²) at a wavelength of 365 nm, and mixed at 300 rpm for 4 hours at room temperature to prepare a solution of the second polymer (PB-NH₂) in which a chain comprising an amine group was grafted with a side chain onto a polybutadiene side chain.
(3) The first polymer solution and the second polymer solution prepared above were added to a round bottom flask, and mixed at 300 rpm for 12 hours at room temperature to prepare a mixed solution of the first polymer and the second polymer. The mixed polymer solution was dried at room temperature to prepare PB-COOH/PB-NH₂ polymer, a binder for an all-solid-state battery.
(4) To 10 ml of dichloromethane as a solvent, the PB-COOH/PB-NH₂ polymer prepared above, and trimethylolpropane tris(3-mercaptopropionic acid) as a crosslinking agent were added with 2,2,2-dimethoxy-2-phenylacetophenone as a photoinitiator, and mixed together for 30 minutes to prepare a mixed solution. The mixed solution was dried at room temperature, and then the reaction was carried out for 2 hours under irradiation of a mercury light source with a wavelength of 365 nm (light intensity 85 mW/cm²) to prepare a binder for an all-solid-state battery.

### Comparative Preparation Example 1: Manufacture of a binder for an all-solid-state battery

To 25 ml of dichloromethane as a solvent, 5.0 g of polybutadiene as a conjugated diene-based polymer was added, and mixed at 300 rpm for 12 hours at room temperature to prepare a mixed solution, and then the mixed solution was dried at room temperature to prepare a binder for an all-solid-state battery.

### Example 1: Manufacture of a positive electrode for an all-solid-state battery

A positive electrode slurry was prepared by mixing LiNi_{0.8}Co_{0.1}Mn_{0.1}O₂ as the positive electrode active material, Li₆PS₅Cl as the solid electrolyte, vapor grown carbon nanofibers (VGCF^{™}-H, Showa Denko) as the conductive material, and the binder prepared in the Preparation Example 1 at a weight ratio of 70:27.5:1:1.5, and it was applied to one side of an aluminum collector having a thickness of 15 µm, and dried at 60°C to prepare a positive electrode for an all-solid-state battery.

### Comparative Example 1: Manufacture of a positive electrode for an all-solid-state battery

A positive electrode for an all-solid-state battery according to Comparative Examples 1 to 4 was prepared by following the same steps as in Example 1, except that the binder prepared in Comparative Preparation Example 1 was used instead of the binder prepared in Preparation Example 1.

### Experimental Example 1: NMR Spectrum Analysis

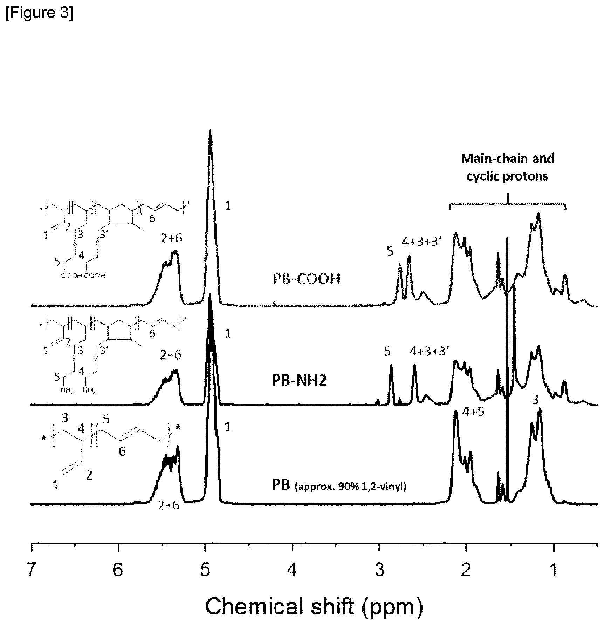

Spectra were measured for the binders of Preparation Example 1 and Comparative Preparation Example 1 by nuclear magnetic resonance spectroscopy (NMR), and the results are shown in FIG. 3.

Referring to FIG. 3, it can be seen that the hydrogen-bonding functional group, carboxylic or amine group, was introduced into the conjugated diene-based polymer in the binder according to Example 1 compared to the binder according to the Comparative Preparation Example.

### Experimental Example 2: Evaluation of the initial discharge capacity and initial Coulombic efficiency of an all-solid-state battery

Initial discharge capacity and initial Coulombic efficiency were evaluated for the all-solid-state batteries comprising the positive electrodes according to Example 1 and Comparative Example 1.

The all-solid-state battery was fabricated by the following method.

150 mg of Li₆PS₅Cl as a solid electrolyte was loaded into a mold cell, and then pelletized at a pressure of 70 MPa. The positive electrode according to Example 1 and Comparative Example 1 prepared by the above process was loaded on one side of the solid electrolyte pellet, and 100 mg of composite negative electrode in which Li_{0.5}In and solid electrolyte were mixed in a weight ratio of 8:2 was loaded on the other side and pressurized to a pressure of 370 MPa to produce an all-solid-state semi-battery. To analyze the performance of each electrode depending on the driving pressure, the fastening strength of the bolt was adjusted so that a driving pressure of 70 MPa or 2 MPa was applied, respectively. For the evaluation of the all-solid-state semi-battery, the battery was sealed to prevent the atmosphere from penetrating into the battery, and then transferred to a constant temperature chamber for electrochemical evaluation.

For the all-solid-state battery including the positive electrode according to Example 1 and Comparative Example 1, the initial discharge capacity was evaluated by the following test method.

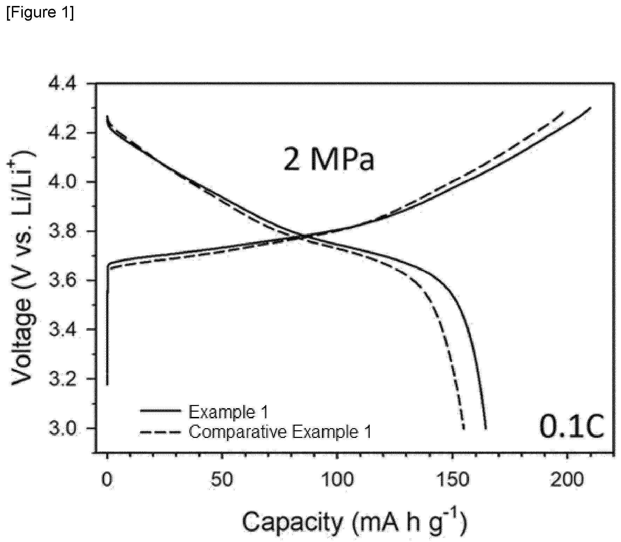

It was charged at a rate (C-rate) of 0.1C until the voltage reached 4.3V (vs. Li) and cutoff at 4.3V (vs. Li). The battery was then discharged at a C-rate of 0.1C until the voltage reached 3.0V (vs. Li) at discharge (1^{st} cycle). The results are shown in Table 1 and FIG. 1 below.

For the all-solid-state batteries including the positive electrodes according to Example 1 and Comparative Example 1, the initial Coulombic efficiency was evaluated by the following test method.

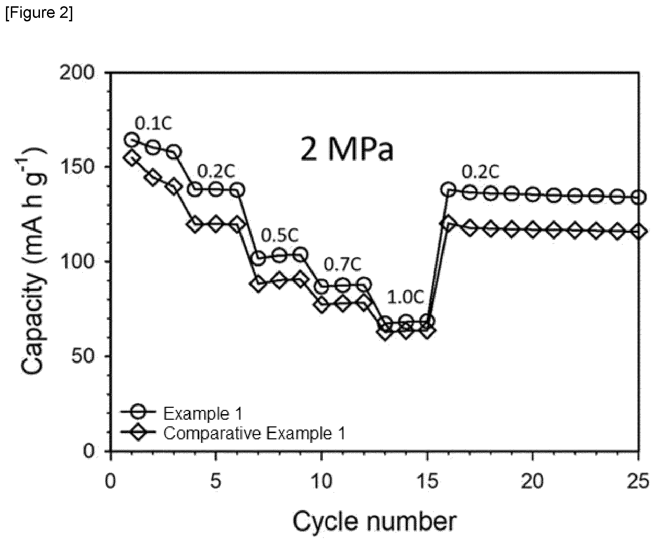

It was charged at a rate (C-rate) of 0.1C until the voltage reached 4.3V (vs. Li) and cutoff at 4.3V (vs. Li). The battery was then discharged at a C-rate of 0.1C until the voltage reached 3.0V (vs. Li) at discharge (1^{st} cycle). This charge and discharge test was repeated for 25 cycles to measure the capacity retention rate of the discharge capacity, and the results are shown in Table 1 and FIG. 2 below.

**[Table 1]**

| | Driving pressure (MPa) | Initial discharge capacity (mAh/g) | Initial Coulombic efficiency (%) |
|---|---|---|---|
| Example 1 | 2 | 164.3 | 78.3 |
| Comparative Example 1 | 2 | 154.9 | 77.5 |
| Example1 | 70 | 163.6 | 81.5 |
| Comparative Example 1 | 70 | 167.1 | 82.1 |

Referring to Table 1, and FIGs. 1 and 2, it can be seen that the all-solid-state battery comprising the positive electrode according to Example 1 had superior initial discharge capacity and initial Coulombic efficiency when the driving pressure was low (2 MPa) compared to the all-solid-state battery comprising the positive electrode of Comparative Example 1. On the other hand, when the driving pressure was high (70 MPa), the difference in performance between the all-solid-state batteries with the positive electrodes according to Example 1 and Comparative Example 1 was insignificant. It can be understood that the "self-healing" binder according to the present invention is effective in suppressing the interfacial detachment of the active material and the solid electrolyte that occurs when the driving pressure is low.

## Claims

1. A binder for an all-solid-state battery comprising:
a first polymer in which a chain comprising a first hydrogen-bonding functional group is grafted with a side chain on the main chain of a conjugated diene-based polymer; and
a second polymer in which a chain comprising a second hydrogen-bonding functional group is grafted with a side chain on the main chain of a conjugated diene-based polymer,
wherein the first hydrogen-bonding functional group of the first polymer and the second hydrogen-bonding functional group of the second polymer form hydrogen bonds with each other,
wherein the first polymer and the second polymer are different from each other,
the first hydrogen-bonding functional group is a carboxylic group,
the second hydrogen-bonding functional group is an amine group, and
the molar ratio of the first hydrogen-bonding functional group or the second hydrogen-bonding functional group to the conjugated diene-based polymer is 100:1 to 100:30, respectively.

2. The binder for an all-solid-state battery according to claim 1, wherein the conjugated diene-based polymer comprises repeating units derived from one or more monomers selected from the group consisting of 1,3-butadiene, 2,3-dimethyl-1,3-butadiene, 2-ethyl-1,3-butadiene, 1,3-pentadiene, 2-halo-1,3-butadiene wherein halo means a halogen atom, and isoprene.

3. The binder for an all-solid-state battery according to claim 1, wherein in the first polymer and the second polymer, a compound comprising a mercapto group (-SH) is grafted onto the main chain of the conjugated diene-based polymer.

4. A positive electrode for an all-solid-state battery comprising a binder according to any one of claims 1 to 3, a conductive material, a positive electrode active material and a solid electrolyte.

5. The positive electrode for an all-solid-state battery according to claim 4, wherein the solid electrolyte is at least one selected from the group consisting of Li₂S-P₂S₅, Li₂S-P₂S₅-LiX wherein X is a halogen atom, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ wherein m and n are positive numbers, and Z is any one of Ge, Zn and Ga, Li₂S-GeS₂, Li₂S-SiS₂-Li₃PO₄, Li₂S-SiS₂-LiₚMO_{q} wherein p and q are positive numbers, and M is any one of P, Si, Ge, B, Al, Ga and In, Li₇₋ₓPS₆₋ₓClₓ wherein 0≤x≤2, Li₇₋ₓPS₆₋ₓBrₓ wherein 0≤x≤2 and Li₇₋ₓPS₆₋ₓIₓ wherein 0≤x≤2.

6. The positive electrode for an all-solid-state battery according to claim 4, wherein the solid electrolyte is an argyrodite-type solid electrolyte comprising one or more selected from the group consisting of Li₆PS₅Cl, Li₆PS₅Br and Li₆PS₅I.

7. An all-solid-state battery comprising a positive electrode; a negative electrode; and a solid electrolyte layer disposed between the positive electrode and negative electrode, wherein the positive electrode comprises the positive electrode for an all-solid-state battery of claim 4.

## Patentansprüche

1. Bindemittel für eine Festkörperbatterie, umfassend:
ein erstes Polymer, in dem eine Kette, die eine erste wasserstoffbindende funktionelle Gruppe umfasst, mit einer Seitenkette auf die Hauptkette eines Polymers auf Basis eines konjugierten Diens gepfropft ist; und
ein zweites Polymer, in dem eine Kette, die eine zweite wasserstoffbindende funktionelle Gruppe umfasst, mit einer Seitenkette auf die Hauptkette eines Polymers auf Basis eines konjugierten Diens gepfropft ist,
wobei die erste wasserstoffbindende funktionelle Gruppe des ersten Polymers und die zweite wasserstoffbindende funktionelle Gruppe des zweiten Polymers Wasserstoffbindungen miteinander bilden,
wobei das erste Polymer und das zweite Polymer voneinander verschieden sind,
die erste wasserstoffbindende funktionelle Gruppe eine Carboxylgruppe ist,
die zweite wasserstoffbindende funktionelle Gruppe eine Amingruppe ist, und
das Molverhältnis der ersten wasserstoffbindenden funktionellen Gruppe oder der zweiten wasserstoffbindenden funktionellen Gruppe zu dem Polymer auf Basis eines konjugierten Diens jeweils 100:1 bis 100:30 beträgt.

2. Bindemittel für eine Festkörperbatterie nach Anspruch 1, wobei das Polymer auf Basis eines konjugierten Diens Wiederholungseinheiten umfasst, die von einem oder mehreren Monomeren abgeleitet sind, die aus der Gruppe ausgewählt sind, die aus 1,3-Butadien, 2,3-Dimethyl-1,3-butadien, 2-Ethyl-1,3-butadien, 1,3-Pentadien, 2-Halogen-1,3-butadien, wobei Halogen ein Halogenatom bedeutet, und Isopren besteht.

3. Bindemittel für eine Festkörperbatterie nach Anspruch 1, wobei in dem ersten Polymer und dem zweiten Polymer eine Verbindung, die eine Mercaptogruppe (-SH) umfasst, auf die Hauptkette des Polymers auf Basis eines konjugierten Diens gepfropft ist.

4. Positive Elektrode für eine Festkörperbatterie, umfassend ein Bindemittel nach einem der Ansprüche 1 bis 3, ein leitfähiges Material, ein Positivelektrodenaktivmaterial und einen Festelektrolyten.

5. Positive Elektrode für eine Festkörperbatterie nach Anspruch 4, wobei der Festelektrolyt mindestens einer ist, der aus der Gruppe ausgewählt ist, die aus Li₂S-P₂S₅, Li₂S-P₂S₅-LiX, wobei X ein Halogenatom ist, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wobei m und n positive Zahlen sind und Z eines von Ge, Zn und Ga ist, Li₂S-GeS₂, Li₂S-SiS₂-Li₃PO₄, Li₂S-SiS₂-LiₚMO_{q}, wobei p und q positive Zahlen sind und M eines von P, Si, Ge, B, Al, Ga und In ist, Li₇₋ₓPS₆₋ₓClx, wobei 0≤x≤2, Li₇₋ₓPS₆₋ₓBrx, wobei 0≤x≤2, und Li₇₋ₓPS₆₋ₓIₓ, wobei 0≤x≤2, besteht.

6. Positive Elektrode für eine Festkörperbatterie nach Anspruch 4, wobei der Festelektrolyt ein Festelektrolyt vom Argyrodit-Typ ist, der einen oder mehrere umfasst, die aus der Gruppe ausgewählt sind, die aus Li₆PS₅Cl, Li₆PS₅Br und Li₆PS₅I besteht.

7. Festkörperbatterie, umfassend eine positive Elektrode; eine negative Elektrode; und eine Festelektrolytschicht, die zwischen der positiven Elektrode und der negativen Elektrode angeordnet ist, wobei die positive Elektrode die positive Elektrode für eine Festkörperbatterie nach Anspruch 4 umfasst.

## Revendications

1. Liant pour une batterie tout-solide comprenant :
un premier polymère dans lequel une chaîne comprenant un premier groupe fonctionnel de liaison hydrogène est greffée avec une chaîne latérale sur la chaîne principale d'un polymère à base de diène conjugué ; et
un deuxième polymère dans lequel une chaîne comprenant un deuxième groupe fonctionnel de liaison hydrogène est greffée avec une chaîne latérale sur la chaîne principale d'un polymère à base de diène conjugué,
dans lequel le premier groupe fonctionnel de liaison hydrogène du premier polymère et le deuxième groupe fonctionnel de liaison hydrogène du deuxième polymère forment des liaisons hydrogène l'un avec l'autre,
dans lequel le premier polymère et le deuxième polymère sont différents l'un de l'autre,
le premier groupe fonctionnel de liaison hydrogène est un groupe carboxylique,
le deuxième groupe fonctionnel de liaison hydrogène est un groupe amine, et
le rapport molaire du premier groupe fonctionnel de liaison hydrogène ou du deuxième groupe fonctionnel de liaison hydrogène au polymère à base de diène conjugué est 100:1 à 100:30, respectivement.

2. Liant pour une batterie tout solide selon la revendication 1, dans lequel le polymère à base de diène conjugué comprend des unités de répétition dérivées d'un ou plusieurs monomères sélectionnés dans le groupe constitué de 1,3-butadiène, 2,3-diméthyl-1,3-butadiène, 2-éthyl-1,3-butadiène, 1,3-pentadiène, 2-halo-1,3-butadiène dans lequel halo indique un atome d'halogène, et isoprène.

3. Liant pour une batterie tout solide selon la revendication 1, dans lequel dans le premier polymère et le deuxième polymère, un composé comprenant un groupe mercapto (-SH) est greffé sur la chaîne principale du polymère à base de diène conjugué.

4. Électrode positive pour une batterie tout-solide comprenant un liant selon l'une quelconque des revendications 1 à 3, un matériau conducteur, un matériau actif d'électrode positive et un électrolyte solide.

5. Électrode positive pour une batterie tout-solide selon la revendication 4, dans laquelle l'électrolyte solide est un ou plusieurs éléments sélectionnés dans le groupe constitué de Li₂S-P₂S₅, Li₂S-P₂S₅-LiX dans laquelle X est un atome d'halogène, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ dans laquelle m et n sont des nombres positifs, et Z est parmi Ge, Zn et Ga, Li₂S-GeS₂, Li₂S-SiS₂-Li₃PO₄, Li₂S-SiS₂-LiₚMO_{q} dans laquelle p et q sont des nombres positifs, et M est parmi P, Si, Ge, B, Al, Ga et In, Li₇₋ₓPS₆₋ₓClₓ dans laquelle 0≤x≤2, Li₇₋ₓPS₆₋ₓBrₓ dans laquelle 0≤x≤2 et Li₇₋ₓPS₆₋ₓIₓ dans laquelle 0≤x≤2.

6. Électrode positive pour une batterie tout-solide selon la revendication 4, dans laquelle l'électrolyte solide est un électrolyte solide de type argyrodite comprenant un ou plusieurs éléments sélectionnés dans le groupe constitué de Li₆PS₅Cl, Li₆PS₅Br et Li₆PS₅I.

7. Batterie tout-solide comprenant une électrode positive ; une électrode négative ; et une couche d'électrolyte solide disposée entre l'électrode positive et l'électrode négative, dans laquelle l'électrode positive comprend l'électrode positive pour une batterie tout-solide selon la revendication 4.
